# EUROPEAN PATENT SPECIFICATION

(11) **EP 3 296 646 B1**
(45) Date of publication and mention of the grant of the patent: **11.03.2020**
(21) Application number: 17191832.9
(22) Date of filing: 19.09.2017
(51) Int. Cl.: F24D 3/14

(54) **RADIATING PANEL FOR AMBIENT CLIMATE-CONTROL**
STRAHLUNGSPANEL ZUR UMGEBUNGSKLIMATISIERUNG
PANNEAU RAYONNANT POUR LE CONTRÔLE DU CLIMAT AMBIANT

(30) Priority: 19.09.2016 IT 201600093943
(43) Date of publication of application: 21.03.2018
(73) Proprietor: Carlieuklima S.r.l., 33074 Fontanafredda (PN) (IT); Loex S.R.L., 39018 Terlano (BZ) (IT)
(72) Inventor: MARTOREL, Gastone, 31020 San Fior (TV) (IT); FABRICATORE, Massimo, 39010 Gargazzone (BZ) (IT)
(74) Representative: Gallo, Luca

(56) References cited:
- EP-A1- 1 004 827
- EP-A1- 2 239 512
- WO-A1-02/37032
- DE-U1- 8 107 402

## Description

### Field of the invention

The present invention refers to a radiating panel for ambient climate-control, according to the preamble of the main independent claim 1.

The present panel is intended to be employed in climate-control plants for heating or cooling environments, or for the summer and winter climate-control of environments.

The panel is of prefabricated, modular and self-supporting type and susceptible of making, when coupled with other panels, continuous covers of walls or ceilings.

The panel according to the invention is therefore inserted in the thermal-technical field of production of heating and cooling (climate-control) systems.

### State of the art

Recently, as is known, climate-control plants are particularly widespread which use radiating panels for heating or cooling environments. The success of such panels is in particular due to the comfort of the climate-control that is formed and due to the possibility of an easy installation thereof, also in pre-existing structures and without requiring building work.

In addition, recently low temperature water heating sources have been developed which offer the advantage of using, as energy source, renewable energies or condensation gas boilers.

Above all in civil field, the use of such low temperature thermal energy sources has created a large market for floor radiating heating panels.

In addition to floor radiating heating, for a few years now also ceiling radiating heating has made inroads. If the floor is typically used for making heat, the radiating ceiling is a system that is able to provide excellent comfort in the environment, both by making heat and by making cold, and for such reason it is encountering an extremely favorable time on the market.

Generally, the radiating panels of known type present on the market today comprise a rear layer made of thermal-insulating material and a front layer fixed via gluing to the rear layer and provided with mechanical properties that confer self-supporting characteristics to the panel.

The rear layer is usually made of a foamed plastic material such as polystyrene or polyurethane while the front layer is made of an aesthetically pleasing material with high mechanical strength and with discrete thermal conductivity, such as plasterboard, fiber cement, sound-absorbent materials, materials of natural origin such as wood, or other similar materials.

Inside the panel, one or more tubes are housed which are extended serpentine-like, in which the heat-carrier fluid of a climate-control plant is made to flow, such plant for example being a reversible heat pump plant.

A first example of a panel of the above-described type is for example explained in the patent EP 1004827. In accordance with such embodiment, the tubes are arranged inside the front layer made of plasterboard in seats obtained via milling, with the terminals that exit from the peripheral edge of the same panel.

Such panel has in practice shown that it does not lack drawbacks.

A first drawback lies in the fact that the provision to make the serpentine tubes in the front layer of plasterboard involves a non-optimal heat exchange with the creation of cold points in which - inevitably during cooling operation - there is the formation of condensate on the exposed surface of the panel.

In order to remedy this drawback, some panels of this type, i.e. with the tubes in the external layer made of plasterboard, provide for a heat distribution plate arranged on the internal surface of the plasterboard. Even if such expedient allows improving the heat exchange, in order to entirely avoid the condensate phenomena such panels are made to operate with lower thermal gradients and hence with lower performances. Indeed, if during heating the surface temperature differences do not involve particular problems, during cooling the localized lowering of the temperature at the tubes, on the external surface of the panel, involves a risk of condensate formation, with a consequent change of color of the panel and in the worst cases dripping of the panel surface.

A second drawback of these panels of known type lies in the fact that they are not very versatile, since it is necessary to provide for a plurality of sizes in order to allow fully covering the entire area of the ceiling or of the walls that one wishes to cover.

A third drawback of these panels of known type lies in the structural complexity, as a consequence of the need to obtain the seat of the tubes inside the plasterboard external layer via milling.

A further fourth drawback of these panels of known type lies in the fact that the serpentine tubes have terminal portions that project from the panel and which involve a significant bulk during transportation, with considerable difficulties in making a compact package. The terminal portions which project can also, by impacting during transportation, ruin the panel itself or be deteriorated and then involve sealing problems in the connectors.

A second panel embodiment is for example explained in the patent applications IT BO2006A000185, EP 2239512 and DE 8107402. In accordance with such embodiments, the serpentine tubes are arranged inside seats obtained via molding in the rear insulating layer, the front plasterboard layer instead remaining intact/integral.

In accordance with such radiating panels, the manifolds of connection between one panel and the other, or between the different circuits of the serpentine tubes, are provided inside the panels themselves.

In practice, also such second radiating panel embodiment has proven that it does not lack drawbacks.

A first drawback lies in the fact that the insertion of the manifolds inside the panel decreases the useful radiating surface area and involves having hydraulic connections with the serpentine tubes arranged inside the radiating panel. This requires making sealed connections that are ensured over time in order to avoid having to intervene with operations of maintenance and substitution of the entire panel.

A second drawback of this second type of radiating panels lies in the fact that the manifolds generate a noise due to their expansion in contact with the insulating layer and the radiating layer made of plasterboard; such circumstance is rather unpleasant, especially if the panels are installed in environments such as bedrooms where a high level of silence is requested, especially at night.

A third drawback of this second type of panels, in common with the first above-described type of panels, lies in the fact that the serpentine tubes still have terminal portions projecting from the panel, which involve undesired bulk during transportation and risks of breakage of the same projecting portions.

In addition, in order to make the sub-modules in work sites, i.e. the partitions from the panel of greater size, it is necessary to intercept the serpentine tubes and the manifolds with operations that over time place the seal of the gaskets at risk, with problems for the purchaser client and with difficulties, in the case of failures or losses, in defining the responsibilities among the various players involved in the production and implementation of the radiating panels.

The patent application WO 02/37032 describes a further radiating panel of known type in which the rear insulating layer is provided with a network of grooves having multiple longitudinal, transverse and diagonal tracks that intersect each other, in a manner such to be able to house different tube shapes.

Also the latter solution of known type has several drawbacks linked for example to the limited shapes of tubes obtainable with a single panel and to the need to be able to obtain shapes of serpentine tubes only by means of fitting together a high number of panels.

### Presentation of the invention

In this situation, therefore, the object of the present invention is to overcome the drawbacks of the abovementioned prior art, by providing a radiating panel for ambient climate-control which has an optimal efficiency, exploiting the useful surface of the panel.

A further object of the present invention is to provide a radiating panel for ambient climate-control, which is silent during the operation thereof.

A further object of the present invention is to provide a radiating panel for ambient climate-control, which has versatile use since it can be adapted to cover surfaces of ceilings or walls of different size.

A further object of the present invention is to provide a radiating panel for ambient climate-control, which is compact, easily transportable and does not have projecting portions which can be damaged during the installation or transportation.

A further object of the present invention is to provide a radiating panel for ambient climate-control, which is safe and entirely reliable in operation.

A further object of the present invention is to provide a radiating panel for ambient climate-control, while - while having high quality - is simple and inexpensive to make.

A further object of the present invention is to provide a radiating panel for ambient climate-control, which requires simple and inexpensive maintenance.

A further object of the present invention is to provide a radiating panel for ambient climate-control, which has low operating costs.

### Brief description of the drawings

The technical characteristics of the invention, according to the aforesaid objects, can be clearly seen in the contents of the enclosed claims and the advantages thereof will be more evident in the following detailed description, made with reference to the enclosed drawings, which represent several merely exemplifying and non-limiting embodiments of the invention, in which:

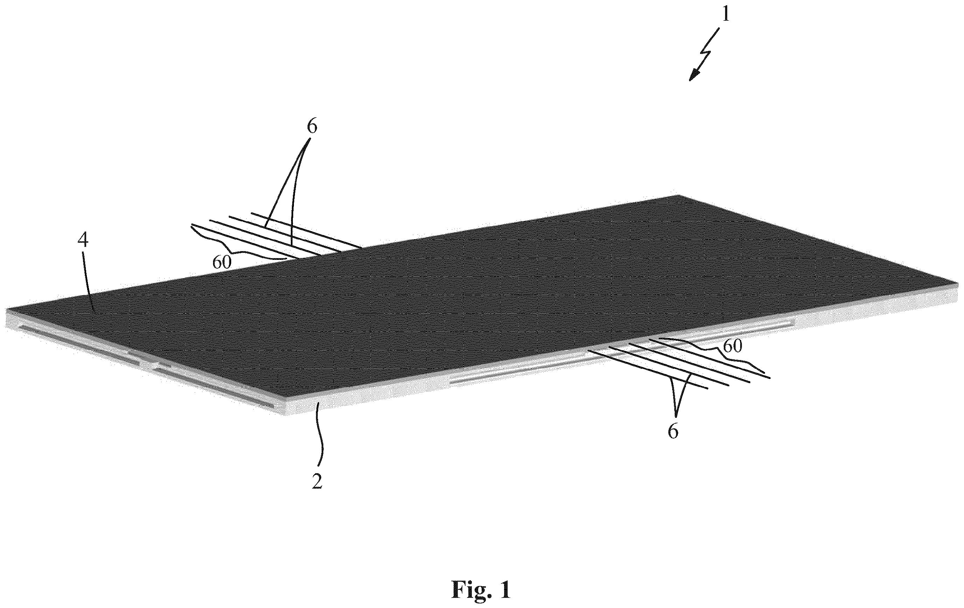

- figure 1 shows a first perspective view of a radiating panel according to the invention;

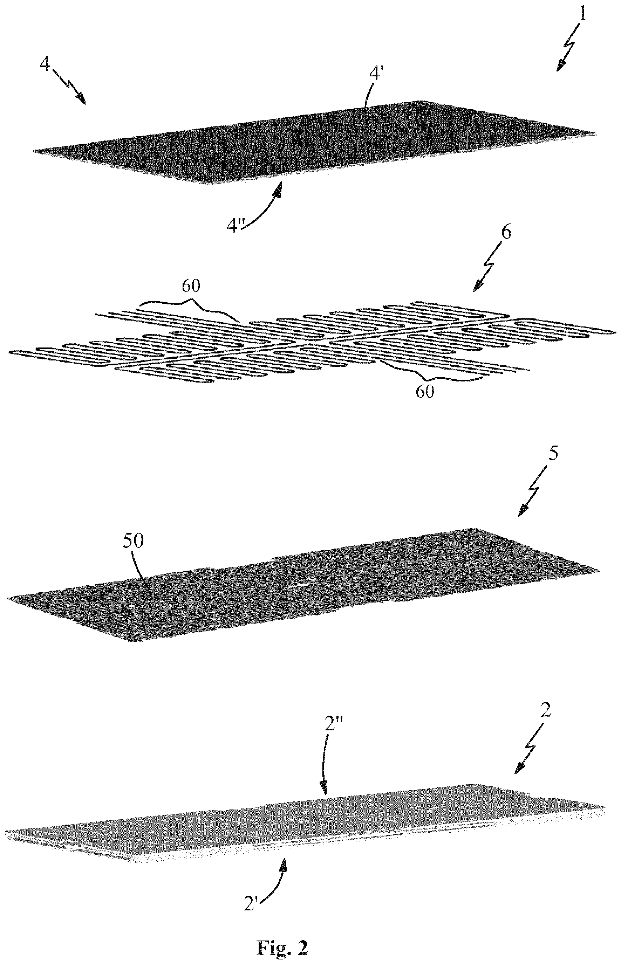

- figure 2 shows a first perspective view of a radiating panel according to the invention illustrated in exploded view and only partially;
- figure 3 shows a top perspective view of the radiating panel, object of the present invention, with the radiating layer removed in order to better illustrate the other characteristics, and with a groove provided in a thermal-insulating layer engaged by a serpentine tube according to a first configuration;
- figure 4 shows a detail of figure 3 at openings of first tracks of the groove on the thermal-insulating layer, from which two first serpentine tubes exit outward, only one of these illustrated herein;

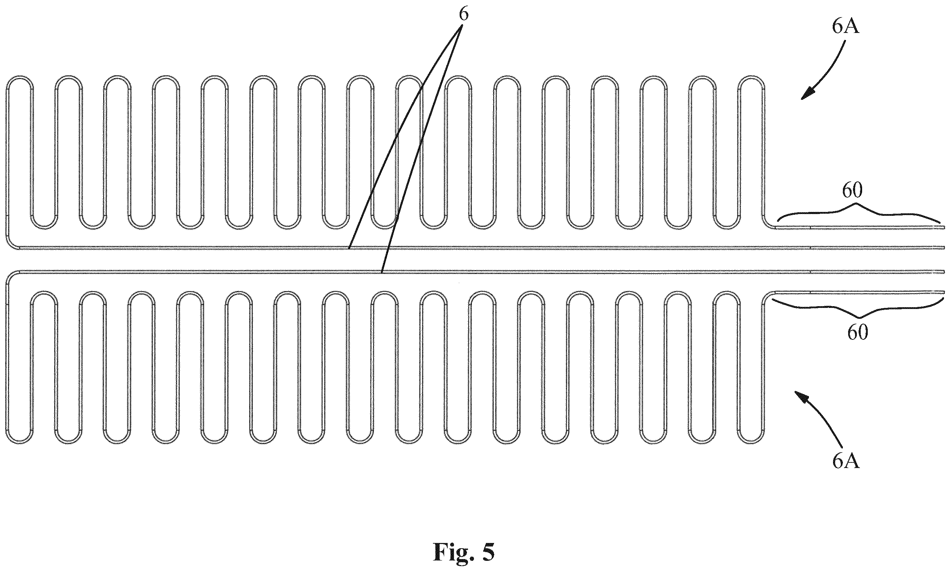

- figure 5 shows the serpentine tube of the first configuration of figure 3;
- figure 6 shows a top perspective view of the radiating panel, object of the present invention, with the radiating layer removed in order to better illustrate the other characteristics, and with a groove provided in a thermal-insulating layer engaged by a serpentine tube according to a second configuration;
- figure 7 shows a detail of figure 6 at openings of second tracks of the groove on the thermal-insulating layer, from which two second serpentine tubes exit outward, only one of these illustrated herein;

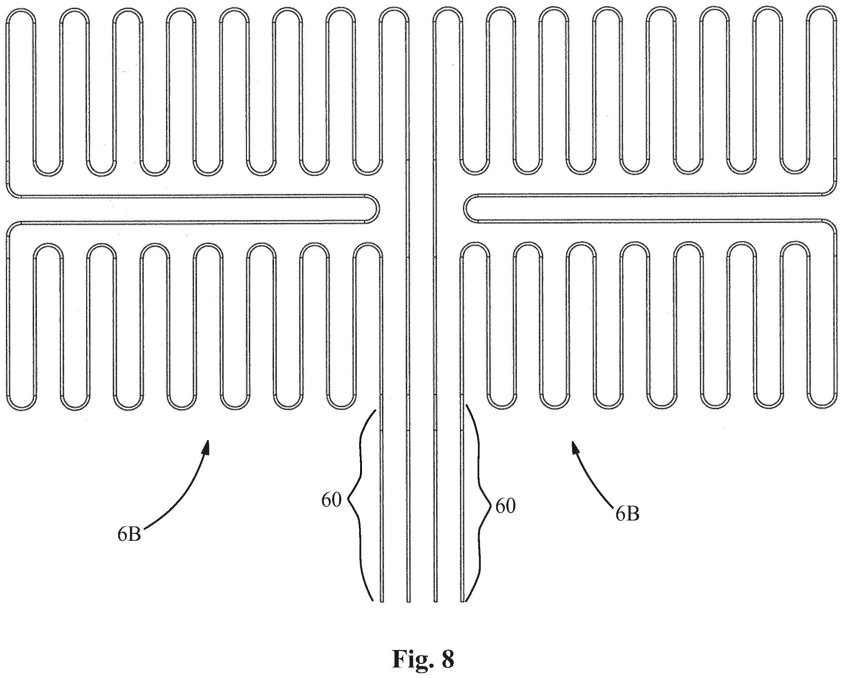

- figure 8 shows the serpentine tube of the second configuration of figure 6;
- figure 9 shows a top perspective view of the radiating panel, object of the present invention, with the radiating layer removed in order to better illustrate the other characteristics, and with a groove provided in a thermal-insulating layer engaged by a serpentine tube according to a third configuration;
- figure 10 shows a detail of figure 9 at openings of first tracks of the groove on the thermal-insulating layer, from which four third serpentine tubes exit outward, only two of these illustrated herein;

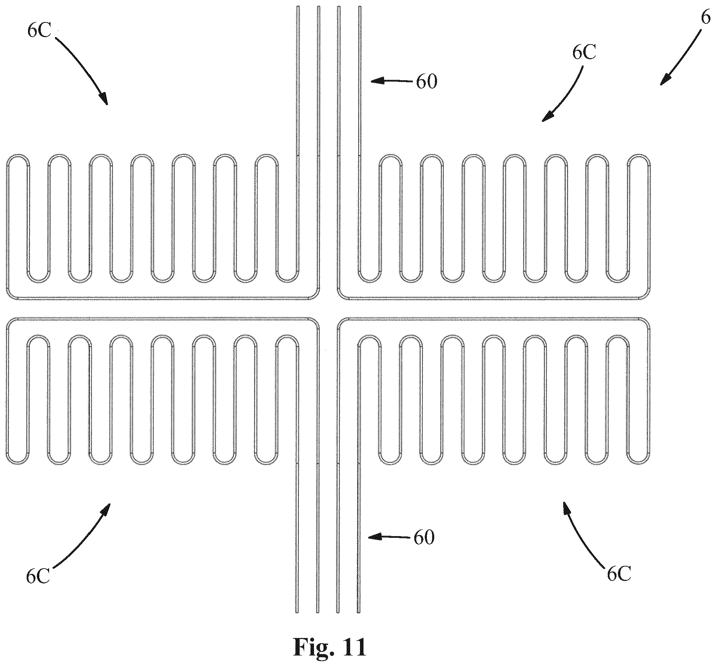

- figure 11 shows the serpentine tube of the third configuration of figure 9;
- figure 12 shows the thermal-insulating layer of the radiating panel, object of the present invention, in a top perspective view;
- figure 13 shows a first enlarged detail of the thermal-insulating layer of figure 11;
- figure 14 shows another enlarged detail of the thermal-insulating layer of figure 11;
- figure 15 shows a plan view of a portion of the insulating layer of the preceding figures indicating an alternative track adapted to define a technical area where through holes are to be made;
- figure 16 shows a first enlarged detail of the thermal-insulating layer of figure 15.

### Detailed description

With reference to the enclosed drawings, reference number 1 overall indicates a radiating panel for ambient climate-control, object of the present invention.

The panel 1 according to the invention is intended to be employed in climate-control plants for heating or cooling environments by means of irradiation.

For such purpose, this is intended to be fixed in a *per se* known manner to ceilings or walls by means of frames and/or screws which are not described in detail as they are well-known to the man skilled in the art.

The panels 1, object of the present invention, are thus intended to be traversed in a forced manner by a hot or cold carrier fluid, depending on whether the panel operates in heating or cooling the environment. The carrier fluid can for example be water or glycolated water and obtained in its hot or cold form with plants of known type that do not form part of the present invention. By way of example, the carrier fluid can be glycolated water drawn with an exchanger from a compensation tank of a heat pump plant. The latter can advantageously comprise a reversible cycle compressor, whose primary fluid is capable of transferring calories in the winter and frigories in the summer by means of an exchanger with a secondary carrier fluid that is made to circulate in the radiating panels 1. The switching of the plant in order to arrange the heat pump for the production of calories or frigories occurs in a known manner through the actuation of solenoid valves, or simple electrical/electronic switch.

The radiating panel 1, object of the present invention, is intended to be used together with other radiating panels to be connected in series or parallel by means of connectors, manifolds or by means of a carrier fluid distribution network, in order to make the cover of the ceiling or wall with size expected for obtaining the desired climate-control effect.

The single panels are side-by-side, or also mechanically connectable to each other with modular combinations that will be specified hereinbelow.

Each radiating panel 1 for ambient climate-control according to the present invention comprises, in a *per se* known manner, a thermal-insulating layer 2 which is provided with a rear face 2' intended to be directed towards the walling on which the radiating panel 1 must be mounted, and with a first internal face 2".

The thermal-insulating layer 2, along with the panel 1, has rectangular form, hence with two long sides L parallel to each other, and with two short sides C parallel to each other and orthogonal to the long sides L.

The thermal-insulating layer 2 is advantageously made of a foamed plastic material such as polystyrene or polyurethane.

Preferably, the thermal-insulating layer 2 is made in a single body.

The thermal-insulating layer 2 is provided with at least one groove 3 which is extended serpentine-like and which is open towards the first internal face 2", from which it is possible to access in order to insert a tube therein, as described hereinbelow.

The serpentine progression of the groove 3 can be extended with a variable number of curves and it can have length and sections that are not the object of specific claim in this patent.

The panel 1 comprises a radiating layer 4, also with rectangular form, with equivalent long sides L and short sides C, e.g. 1200 x 2400 mm, provided with an exposed face 4', intended to be directed towards the environment to be climate-controlled, and with a second internal face 4" directed towards the first internal face 2" of the thermal-insulating layer 2.

The radiating layer 4 is made of an aesthetically pleasing material, with high mechanical strength and with at least discrete thermal conductivity, such as plasterboard, fiber cement, sound-absorbent materials, materials of natural origin such as wood, or other similar materials.

The panel 1 also advantageously comprises at least one conductive plate 5, which is interposed between the first internal face 2" of the thermal-insulating layer 2 and the second internal face 4" of the radiating layer 4. The aforesaid plate 5 is shaped with a projecting channel 50 which is engaged in a fitted manner within the groove 3 of the thermal-insulating layer 2, following the serpentine extension thereof.

Preferably, the plate 5 is obtained in sections which are associated with each other in order to cover the first internal face 2" of the thermal-insulating layer 2.

The conductive plate 5 is also preferably obtained with an aluminum plate advantageously having a thickness not less than 0.35 mm and preferably 0.4 mm; values that confirm an optimal heat transmission.

At least one serpentine tube 6 is therefore provided, which is housed inside the groove 3 of the thermal-insulating layer 2.

More in detail, the serpentine tube 6 is interposed between the thermal-insulating layer 2 and the radiating layer 4 and, in particular, is positioned between the first internal face 2" of the thermal-insulating layer 2 and the second internal face 4" of the radiating layer 4.

In accordance with the preferred embodiment of the invention, the serpentine tube must be intended as inserted in the groove 3 with the interposition of the plate 5, being engagingly inserted in the projecting channel 50 of the latter for at least one section of the path of the same channel that follows that of the groove 3.

Hereinbelow, reference will be made to the serpentine tube 6 indicated as inserted in the groove or in branches thereof; it must be intended that in accordance with the preferred solution of the invention, also the plate 5 with its channel 50 is interposed.

The serpentine tube 6 is inserted in a fitted relationship inside the channel 50 by forcing the latter, initially slightly, to be opened before entering its interior such that the channel 50 - being closed on the serpentine tube 6 - firmly retains such tube.

The serpentine tube 6 is preferably made of flexible plastic material, e.g. of 8 mm diameter, such that the plate 5 can be easily inserted in a fitter manner within the channel 50.

The serpentine tube 6 has diameter slightly greater than the opening of the channel 50. In this manner, in order to make the serpentine tube 6 enter into the opening of the channel 50, it is necessary to force the same tube in order to slightly widen the opening such that - once it has entered into the channel 50 - the opening is slightly closed, firmly retaining the tube 6.

The widening of the channel 50, which is partly maintained also after the insertion of the serpentine tube 6, also involves a firm mechanical engagement of the same plate with the thermal-insulating layer 2, an undercut insertion of the channel 50 in the groove 3 also being provided in a light manner.

The thermal-insulating layer 2 and the radiating layer 4 are fixed to each other with the interposition of the conductive plate 5 and of the serpentine tube 6. The fixing occurs in a manner already known the man skilled in the art, for example by means of gluing.

In accordance with the idea underlying the present invention, the groove 3 made on the first internal face 2" of the thermal-insulating layer 2 is extended, allowing multiple arrangements of the serpentine tube which allow separating the panels 1 along multiple cutting lines, in order to obtain panels 1 of different sizes in a versatile manner.

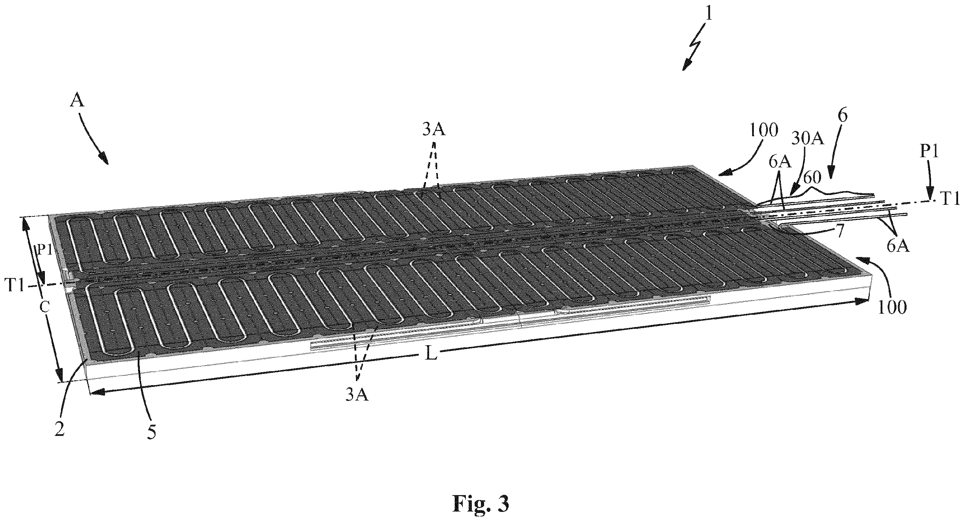

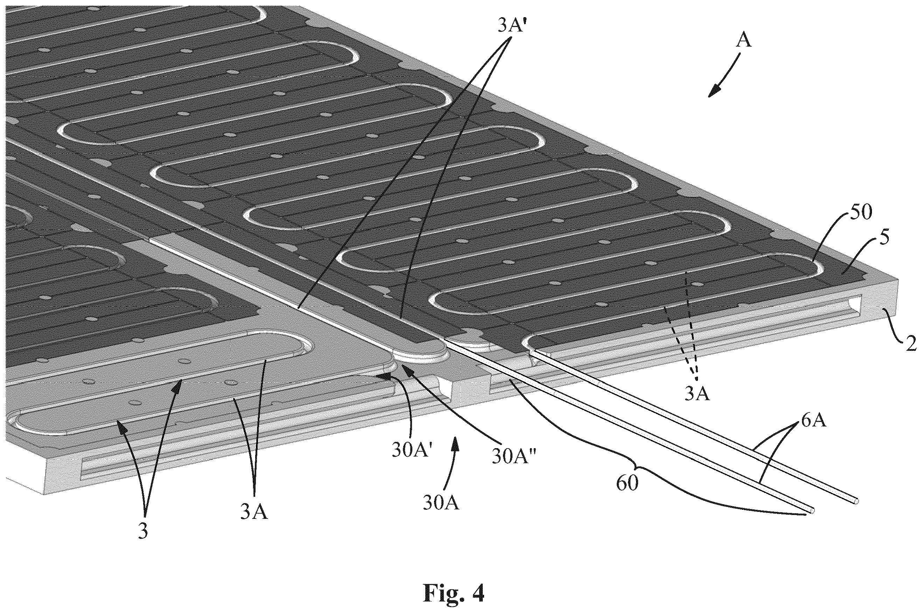

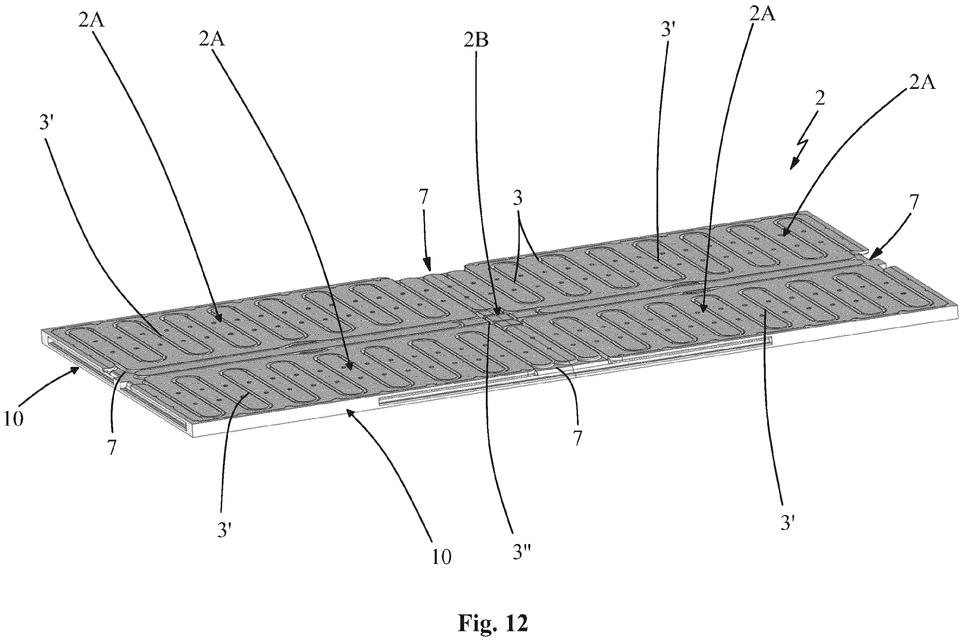

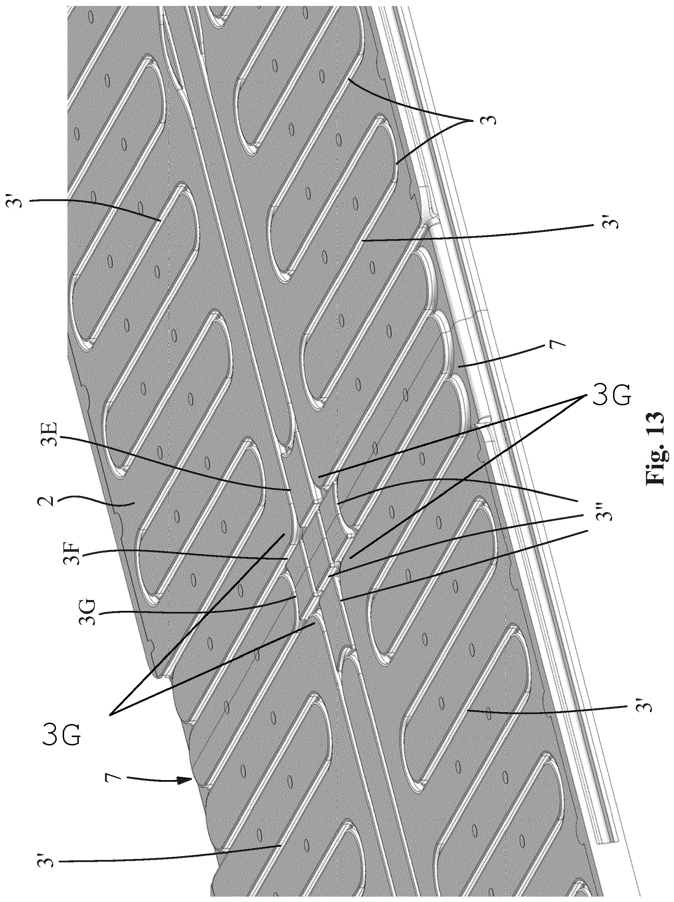

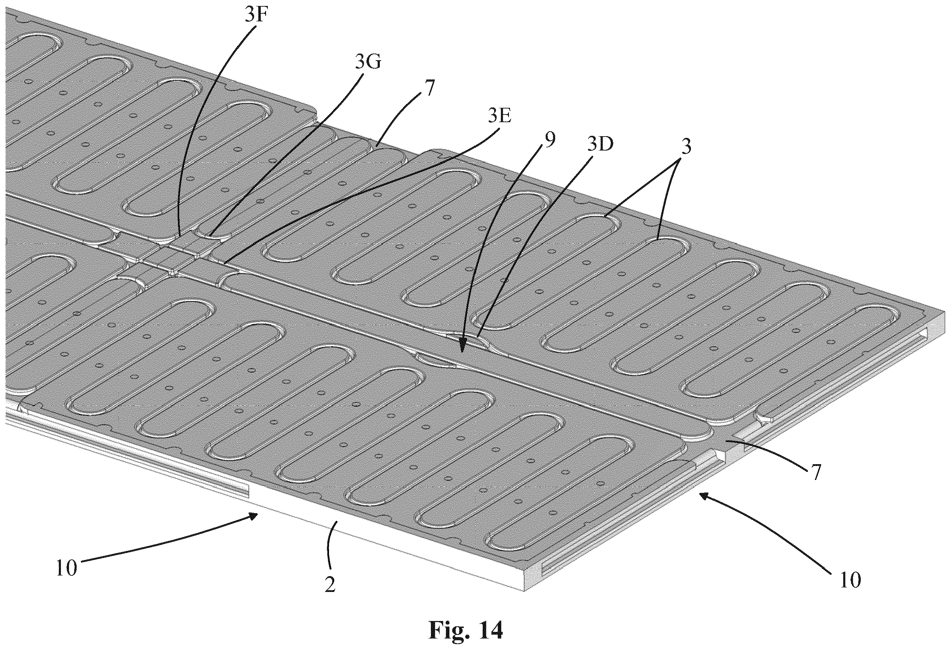

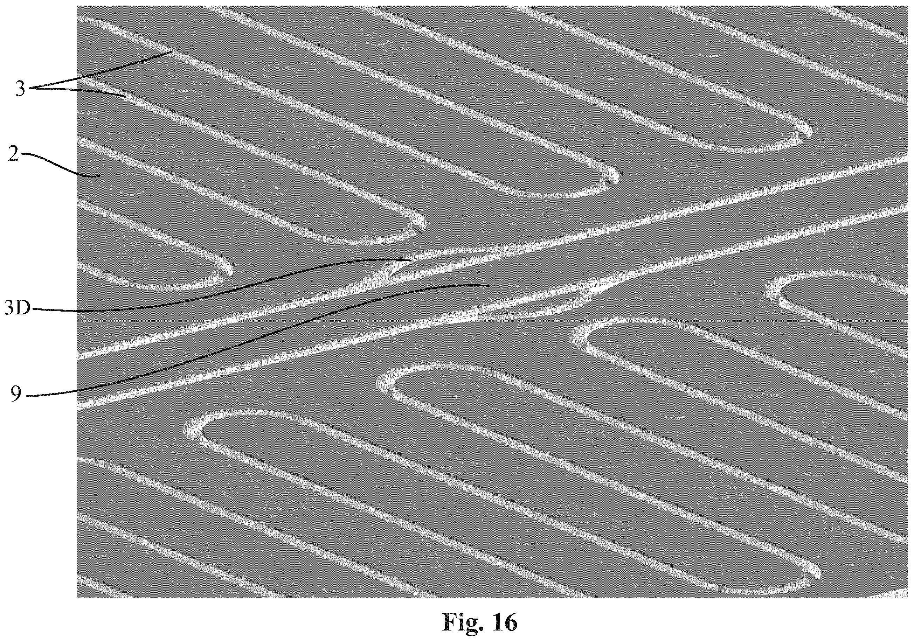

More in detail, according to the invention the groove 3 (illustrated in its entirety in figure 12 and with some parts enlarged in figures 13, 14 and 16, which for such purpose only represent the thermal-insulating layer 2) comprises at least two first tracks 3A (see figures 3 and 4), susceptible of housing two first serpentine tubes 6A separated from each other, each provided with a first pair of first openings 30A, including a first inlet opening 30A' and a first outlet opening 30A", which are arranged at a short side C of the thermal-insulating layer 2. The two first tubes 6A exit from the panel 1 with their ends traversing the aforesaid pairs of first openings 30A of the groove 3.

The aforesaid two first tracks 3A are symmetrically arranged with respect to a longitudinal plane P1 which is extended in median position parallel to the long side L of the thermal-insulating layer 2 without these intercepting each other, allowing the two first serpentine tubes 6A to remain separated from each other.

Figures 3 and 4 illustrate the panel 1 with the serpentine tube 6 inserted in the first tracks 3A (whose reference is indicated for the sake of clarity with solid line where the groove is visible, some plates 5 having been correspondingly omitted, and hatching where it is instead hidden by the same plates) so as to define a first configuration A of the panel 1 (illustrated in figure 3 without the radiating layer 4 in order to allow viewing the underlying parts). In an entirely identical manner, the first pair of first openings 30A can be made on the opposite short side C.

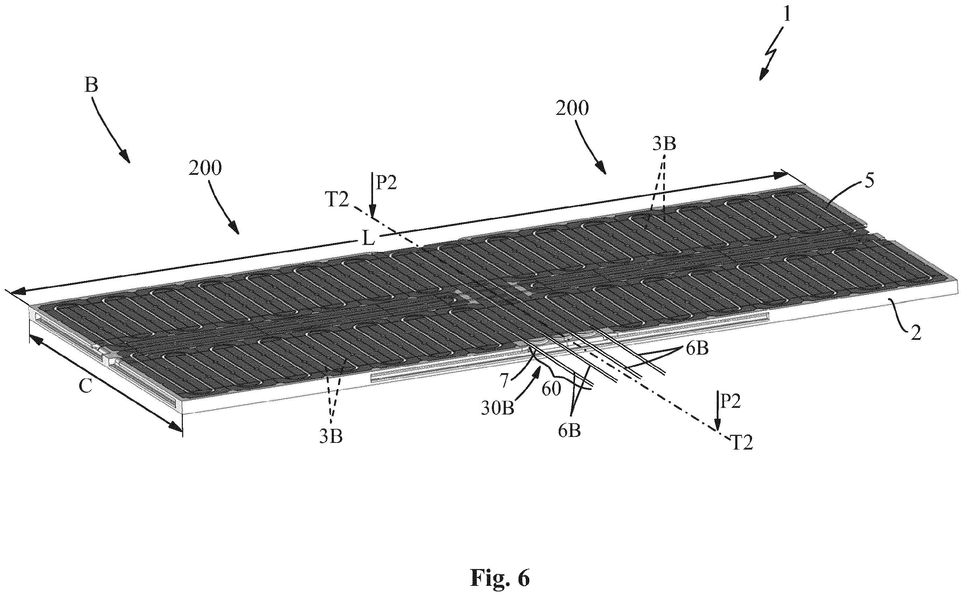

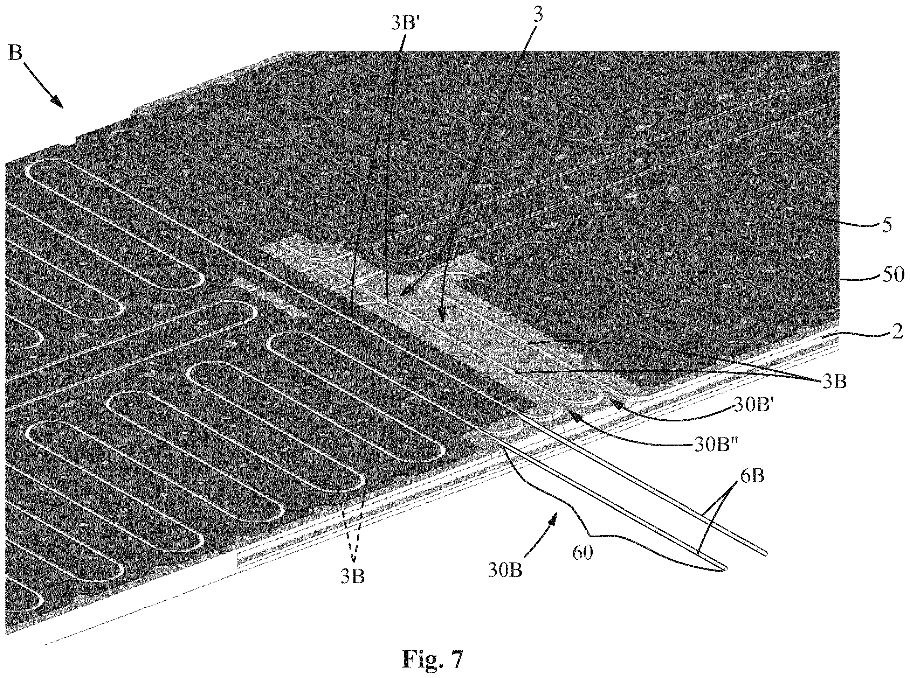

According to the invention, the groove 3 of the thermal-insulating layer 2 also comprises at least two second tracks 3B (see figures 6 and 7), susceptible of housing two second serpentine tubes 6B separated from each other, each provided with a second pair of second openings 30B, including a second inlet opening 30B' and a second outlet opening 30B", which are arranged at a long side L of the thermal-insulating layer 2. The two second tubes 6B exit from the panel 1 with their ends crossing the aforesaid pairs of second openings 30B of the groove 3.

The aforesaid two second tracks 3B are symmetrically arranged with respect to a transverse plane P2 which is extended in median position parallel to the short side C of the thermal-insulating layer 2 without these intercepting each other, allowing the two second serpentine tubes 6B to remain separated from each other.

Figures 6 and 7 illustrate the panel 1 with the serpentine tube 6 inserted in the second tracks 3B (whose reference is indicated for the sake of clarity with solid line where the groove is visible, some plates 5 having been correspondingly omitted, and hatching where instead it is hidden by the same plates) so as to define a second configuration B of the panel 1 (illustrated in figure 6 without the radiating layer 4 in order to allow seeing the underlying parts).

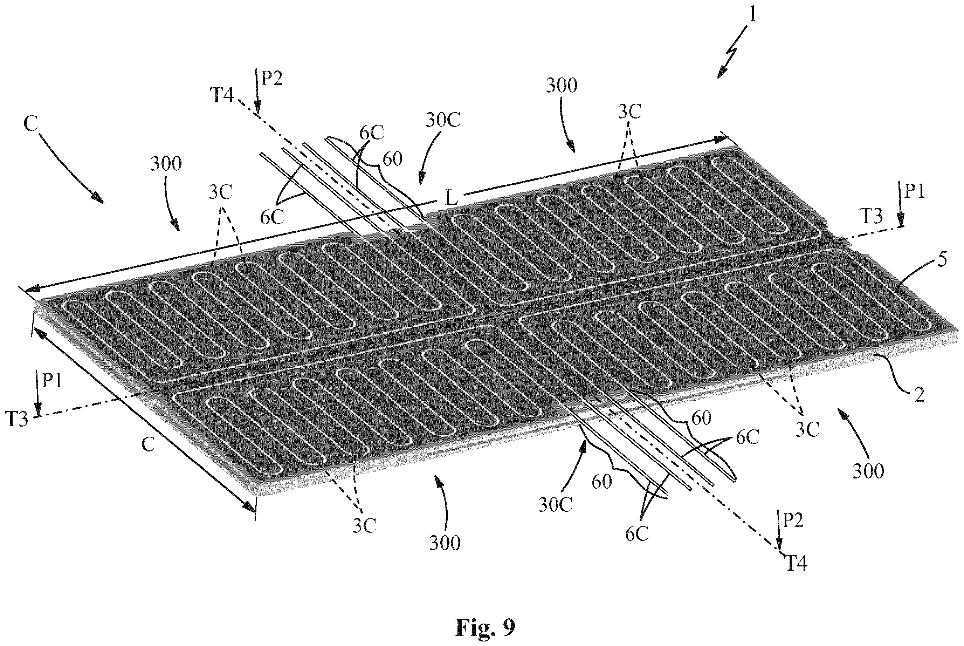

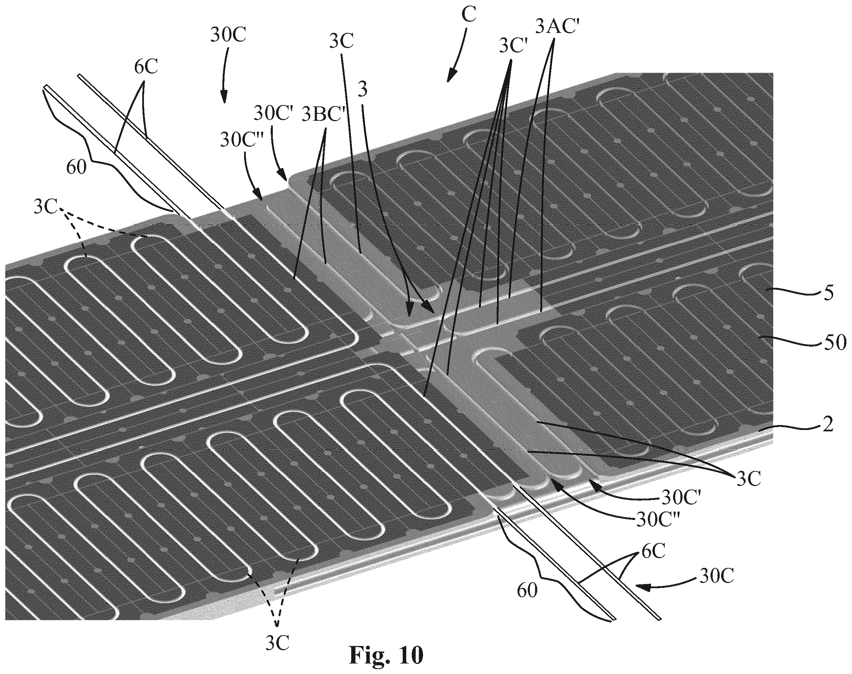

According to the invention, the groove 3 of the thermal-insulating layer 2 also comprises at least four third tracks 3C (see figures 9 and 10), susceptible of housing four third serpentine tubes 6C separated from each other, each provided with a third pair of third openings 30C, including a third inlet opening 30C' and a third outlet opening 30C".

The aforesaid four pairs of third openings 30C are arranged at the two long sides L of the thermal-insulating layer 2, two for each long side L.

The four third tubes 6C exit from the panel 1 with their ends crossing the aforesaid pairs of third openings 30C of the groove 3.

The aforesaid four third tracks 6C are symmetrically arranged both with respect to the longitudinal plane P1 which is extended in median position parallel to the long side L of the thermal-insulating layer 2 and with respect to the transverse plane P2 which is extended in median position parallel to the short side C of the thermal-insulating layer 2, and without these intercepting each other, allowing the four third serpentine tubes 6C to remain separated from each other.

Figures 9 and 10 illustrate the panel 1 with the serpentine tube 6 inserted in the third tracks 3C (whose reference is indicated for the sake of clarity with solid line where the groove is visible, some plates 5 having been correspondingly omitted, and hatching where instead it is hidden by the same plates) so as to define a third configuration C of the panel 1 (illustrated in figure 9 without the radiating layer 4 in order to allow seeing the underlying parts).

Advantageously, each track 3A, 3B and 3C is at least partly extended with a serpentine progression, comprising in particular multiple pairs of rectilinear sections, preferably parallel to each other, and multiple curved sections (in particular with 180° bend) arranged to connect the rectilinear sections of the corresponding pairs of rectilinear sections.

The tracks 3A, 3B and 3C as described above confer considerable versatility of use to the panel 1 during manufacturing, allowing the arrangement of the openings 30A, 30B and 30C on different sides and allowing the separation of the panel 1 along cutting lines adapted to allow the use thereof in different sizes, as is better explained hereinbelow.

In accordance with the first configuration A of the panel 1, the two first serpentine tubes 6A are housed in the two first tracks 3A which comprise two respective first central branches 3A' which are extended without interruption parallel to each other along the extension of the long sides L up to two corresponding first openings 30A.

Due to such configuration, the panel 1 can be separated into two separate first panels 100 along a first cutting line T1 defined by the intersection of the panel 1 with the median longitudinal plane P1. In particular the first cutting line T1 runs parallel to the first central branches 3A' which house the two first serpentine tubes 6A.

In accordance with the second configuration B of the panel 1, the two second serpentine tubes 6B are housed in the two second tracks 3B which comprise two respective second central branches 3B' which are extended without interruption parallel to each other along the extension of the short sides C up to two corresponding second openings 30B.

Due to such configuration, the panel 1 can be separated into two separate second panels 200 along a second cutting line T2 defined by the intersection of the panel 1 with the median transverse plane P2. In particular the second cutting line T2 runs parallel to the second central branches 3B' which house the two second serpentine tubes 6B.

In accordance with the third configuration C of the panel 1, the four third serpentine tubes 6C are housed in the four third tracks 3C which each comprise a third central branch 3C'.

Such central branch 3C' is extended with two sections orthogonal to each other, 3AC' and 3BC'. More in detail, the first section 3AC' is extended parallel to a long side L of the panel 1 and parallel to the first section 3AC' of the third central branch 3C' which houses a third transversely contiguous tube 6C (i.e. side-by-side on the short side C of the panel 1).

The second section 3BC' connected to the first section 3AC' by means of a 90 degree bend, is extended parallel to a short side C of the panel 1 and parallel to the second section 3BC' of the third central branch 3C' which houses a third longitudinally contiguous tube 6C (i.e. side-by-side on the long side L of the panel 1).

Due to such configuration, the panel 1 can be separated into four separate third panels 300 along a third and a fourth cutting line, respectively indicated with T3 and T4, of which the third cutting line T3 coincides with the first cutting line T1 and is therefore once again defined by the intersection of the panel 1 with the median longitudinal plane P1 (in particular the third cutting line T3 runs parallel to the four first sections 3AC' of the third central branches 3C'), and the fourth cutting line T4 coincides with the second cutting line T2 and is therefore once again defined by the intersection of the panel 1 with the median transverse plane P2 (in particular the fourth cutting line T4 runs parallel to the four second sections 3BC' of the third central branches 3C').

The separation of the panel 1 thus arranged into the first, second or third panels, respectively 100, 200 or 300, arises from the inventive provision of making the thermal-insulating layer 2 with a groove 3 comprising at least first, second and third tracks 3A, 3B, and 3C susceptible of selectively housing the first, second and third serpentine tubes 6A, 6B and 6C, such that first, second and third panels 100, 200 and 300 of different size can be made by means of selective divisions of the panel 1 according to first, second or third and fourth cutting lines T1, T2 or T3+T4.

For example, starting from a 1200 x 2400 mm panel, it is possible with the cut T1 of the first configuration A to obtain two first panels of 600 x 2400 mm size, with the cut of the second configuration B to obtain two second panels of 1200 x 1200 mm size and with the third configuration C to obtain four third panels of 600 x 1200 mm size.

The groove 3 is thus the result of the superimposition of the first, second and third tracks 3A, 3B, and 3C which coincide for nearly their entire extension except for small sections that are clearly visible and indicated with the references 3E, 3F and 3G in figure 13. More in detail, in the central zone of the panel 1, side-by-side pairs of longitudinal and transverse central sections are provided, respectively indicated with 3E and 3F, connected together by curved sections 3G. Due to these simple additional sections it is possible to transform the panel 1 into the different above-illustrated configurations A, B and C.

In particular, the longitudinal sections 3E define corresponding sections of the first central branches 3A' of the first tracks 3A, and the transverse sections 3F define corresponding sections of the second central branches 3B' of the second tracks 3B.

Preferably, the longitudinal sections 3E are parallel to the longitudinal plane P1 and the transverse sections 3F are parallel to the transverse plane P2.

Suitably, the curved sections 3G are arranged to connect corresponding pairs of longitudinal sections 3E of corresponding pairs of transverse sections 3F.

Advantageously, the groove 3 comprises four extension sections 3' lacking intersections, which constitute corresponding sections of the tracks 3A, 3B, 3C of the groove 3 itself.

The extension sections 3' are arranged symmetrically both with respect to the longitudinal plane P1 and with respect to the transverse plane P2 and, preferably, each of the aforesaid extension sections 3' is configured for being extended in the corresponding third panel 300 obtainable by means of the third and the fourth cutting line T3 and T4.

In particular, each extension section 3' is shaped in a serpentine manner.

Advantageously, the groove 3 comprises multiple connector sections 3" intersecting each other and arranged to connect the aforesaid extension sections 3', in a manner such to define the first, second and third tracks 3A, 3B, 3C of the groove 3 itself.

In particular, the aforesaid connector sections 3" comprise the aforesaid side-by-side pairs of longitudinal and transverse central sections 3E and 3F and the curved sections 3G. Advantageously, the connector sections 3" are configured for being partially extended into the four third panels 300 obtainable by means of the third and the fourth cutting line T3 and T4. Advantageously, the first internal surface 2" of the thermal-insulating layer 2 of the radiating panel 1 comprises four extension zones 2A (not superimposed) arranged symmetrically both with respect to the longitudinal plane P1 and with respect to the transverse plane P2, and an intersection zone 2B arranged at the intersection of the longitudinal plane P1 with the transverse plane P2.

In each of the aforesaid extension zones 2A, a corresponding extension section 3' of the groove 3 is extended, and in the aforesaid intersection zone 2B the connector sections 3" of the groove 3 itself are extended.

In accordance with an advantageous characteristic of the panel 1 according to the present invention, the pair of openings 30A, 30B and 30C of each corresponding track 3A, 3B, and 3C of the groove 3 is in communication with a containment seat 7, which is extended up to the perimeter edge 10 of the panel 1 and is susceptible of housing a terminal section 60 of the corresponding serpentine tube 6 which for such purpose is bent in order to be contained in the aforesaid seat 7. In particular, the containment seat 7 is provided with a first part, extended on the first internal face 2" of the thermal-insulating layer 2, and with a second part connected to the first and extended along at least one section of the perimeter edge 10 of the panel 1, preferably extended into the thickness of the thermal-insulating layer 2 between the rear face 2' and the first internal face 2" of the latter.

In this manner, the finished panel 1 appears without parts projecting beyond its perimeter edge 10 so as to be easily packable, stackable on a pallet, and housable in a truck and other transportation means. The terminal sections 60 are preferably locked within the containment seat 7 by means of removable anchorage means, such as clips (not illustrated) which are easily removed when it is necessary to unpack the panels 1 for their use.

In accordance with a further advantageous characteristic of the panel 1 according to the present invention, the serpentine tubes 6 housed in the groove 3 are extended from the inlet opening to the outlet opening of the latter without any hydraulic connection inside the panel 1, i.e. without internal connections to manifolds.

Preferably, each serpentine tube 6A, 6B, 6C is extended without interruption, in particular in a single body, between the inlet opening 30A', 30B', 30C' and the outlet opening 30A", 30B", 30C" of the corresponding track 3A, 3B, 3C.

The manifolds are in fact provided outside the panel 1. In this manner, one avoids possible losses in the connections, which would involve the complete substitution of the panel with another new one, and hence with considerable maintenance costs for the plant once the panels are installed.

In addition, due to such provision, the covering of the panel 1 with the serpentine tubes is uniform and extended over at least 90-95% of its surface area, increasing the efficiency of the panel with respect to conventional panels with manifold incorporated in the thermal-insulating layer.

The extreme uniformity of distribution attained by this panel 1, along with the provision of arranging the tubes 6 in the thermal-insulating layer 2, allows reducing the problems of nonuniformity of heat exchange and hence eliminating the cold points and thus the consequent undesired condensate points.

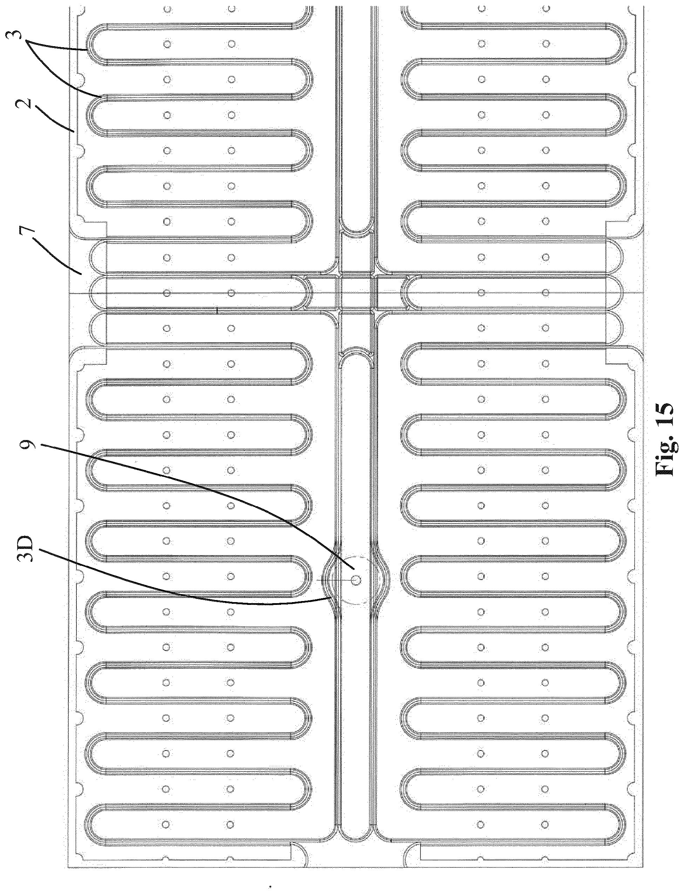

Advantageously, the panels are hydraulically connected to each other through common manifolds, the tubes 6 of the single panels 1 leading to such manifolds. Preferably, the aforesaid serpentine tubes 6 are connected to the manifolds by means of connectors that are engaged on the external edge of the ends of the serpentine tubes, so as to not reduce the diameter useful for the passage of the carrier fluid in such connections. Such diameter reduction would involve a progressive reduction of the flow rate load of the carrier fluid, with the consequence that the final panels connected in parallel to the connector would receive a fluid flow much lower than the first panels. As represented in the detailed view of figure 15, the panel 1 according to the invention can advantageously provide that the groove 3 and hence the tube 6 have alternative 3D paths, aimed to delimit technical areas 9 of the panel 1 lacking tube aimed to allow the making of through openings in the panel 1 for the insertion of lights or sprinklers on the ceiling.

Advantageously, in order to allow the installer to identify, with certainty, the position of such technical areas 9, i.e. also of the tubes 6, on an external face and preferably on that of the radiating layer 4, the tracks of the tubes are designed by means of serigraphy, so to be able to define with certainty the cutting lines T1, T2, T3 and T4 as well as the technical areas 9 where the through holes are to be made.

The finding thus conceived therefore attains the pre-established objects.

## Claims

1. Radiating panel (1) for ambient climate-control, which comprises:
- at least one rectangular thermal-insulating layer (2), having two short sides (C) and two long sides (L), and such thermal-insulating layer (2) is provided with a rear face (2') and with a first internal face (2"); said first internal face (2") being provided with at least one groove (3) with serpentine extension open towards said first internal face (2");
- at least one rectangular radiating layer (4), provided with an exposed face (4') and with a second internal face (4") directed towards the first internal face (2") of said thermal-insulating layer (2);
- at least one serpentine tube (6) housed inside the groove (3) of said thermal-insulating layer (2) and interposed between said thermal-insulating layer (2) and said radiating layer (4);
wherein said at least one groove (3) comprises:
- at least two first tracks (3A) with serpentine extension, configured for housing two first serpentine tubes (6A) separated from each other, each provided with a first pair of first openings (30A), which are arranged at one said short side (C) of said thermal-insulating layer (2); said two first tracks (3A) being symmetrically arranged with respect to a longitudinal plane (P1) which is extended in median position parallel to the long side (L) of said thermal-insulating layer (2) without said two first tracks (3A) intercepting each other;
- at least two second tracks (3B) with serpentine extension, configured for housing two second serpentine tubes (6B) separated from each other, each provided with a second pair of second openings (30B), which are arranged at one said long side (L) of said thermal-insulating layer (2); said two second tracks (3B) being symmetrically arranged with respect to a transverse plane (P2) which is extended in median position parallel to the short side (C) of said thermal-insulating layer (2) without said two second tracks (3B) intercepting each other;
- at least four third tracks (3C) with serpentine extension, configured for housing four third serpentine tubes (6C) separated from each other, each provided with a third pair of third openings (30C), which are arranged at the two long sides (L) of said thermal-insulating layer (2), two for each said long side (L); said four third tracks (3C) being symmetrically arranged both with respect to said longitudinal plane (P1), which is extended in median position parallel to the long side (L) of said thermal-insulating layer (2), and with respect to said transverse plane (P2), which is extended in median position parallel to the short side (C) of said thermal-insulating layer (2), and without said four third tracks (3C) intercepting each other;
said radiating panel (1) being **characterized in that** said groove (3) comprises:
- at least four extension sections (3') lacking intersections, which are arranged symmetrically both with respect to said longitudinal plane (P1) and with respect to said transverse plane (P2) and constitute corresponding sections of said tracks (3A, 3B, 3C);
- multiple connector sections (3") intersecting each other and placed to connect said extension sections (3');
wherein said groove (3) is the result of the superimposition said the first, second and third tracks (3A, 3B, 3C) which coincide for nearly their entire extension except for, in a central zone of said radiating panel (1), side-by-side pairs of longitudinal and transverse central sections (3E, 3F) connected together by curved sections (3G);
wherein said connector sections (3") comprise said side-by-side pairs of longitudinal and transverse central sections (3E, 3F) and said curved sections (3G).

2. Radiating panel (1) for ambient climate-control, according to claim 1, **characterized in that** it comprises at least one conductive plate (5) interposed between the first internal face (2") of said thermal-insulating layer (2) and the second internal face (4") of said radiating layer (4) and provided with a projecting channel (50) engaged in a fitted manner within said groove (3) and housing said serpentine tube (6).

3. Radiating panel (1) for ambient climate-control, according to claim 1, **characterized in that** said two first serpentine tubes (6A) are housed in said two first tracks (3A), which comprise two respective first central branches (3A') which are extended without interruption parallel to each other along the extension of said long sides (L) up to two corresponding first openings (30A).

4. Radiating panel (1) for ambient climate-control, according to claim 3, **characterized in that** said radiating panel (1) can be separated into two first separate panels (100) along a first cutting line (T1) defined by the intersection of said radiating panel (1) with said median longitudinal plane (P1).

5. Radiating panel (1) for ambient climate-control, according to claim 1, **characterized in that** said two second serpentine tubes (6B) are housed in said two second tracks (3B), which comprise two respective second central branches (3B') which are extended without interruption parallel to each other along the extension of said short sides (C) up to two corresponding second openings (30B).

6. Radiating panel (1) for ambient climate-control, according to claim 5, **characterized in that** said radiating panel (1) can be separated into two second separate panels (200) along a second cutting line (T2) defined by the intersection of said radiating panel (1) with said median transverse plane (P2).

7. Radiating panel (1) for ambient climate-control, according to claim 1, **characterized in that** said four third serpentine tubes (6C) are housed in said four third tracks (3C), which each comprise a third central branch (3C') which is extended for a first section (3AC') parallel to the long side (L) of said thermal-insulating layer (2) and parallel to the first section (3AC') of the third central branch (3C') of a transversely contiguous third tube (6C), and for a second section (3BC') connected to the first by means of a 90 degree bend, parallel to the short side (C) of said thermal-insulating layer (2) and parallel to the second section (3BC') of the third central branch (3C') of a longitudinally contiguous third tube (6C).

8. Radiating panel (1) for ambient climate-control, according to claim 7, **characterized in that** said radiating panel (1) can be separated into four separate panels (300) along a third (T3) and a fourth cutting line (T4), of which the third cutting line (T3) is defined by the intersection of said radiating panel (1) with said median longitudinal plane (P1), and the fourth cutting line (T4) is defined by the intersection of said radiating panel (1) with said median transverse plane (P2).

9. Radiating panel (1) for ambient climate-control, according to any one of the preceding claims, **characterized in that** the pair of openings (30A, 30B, 30C) of each corresponding track (3A, 3B, 3C) of said groove (3) is in communication with a containment seat (7) which is extended up to the perimeter edge (10) of the radiating panel (1) and is susceptible of housing a bent terminal section (60) of said corresponding serpentine tube (6).

10. Radiating panel (1) for ambient climate-control, according to claim 2, **characterized in that** said at least one conductive plate (5) has a thickness not less than 0.35 mm and preferably is 0.4 mm.

11. Radiating panel (1) for ambient climate-control, according to any one of the preceding claims, **characterized in that** the serpentine tubes (6) housed in said groove (3) are extended from the inlet opening to the outlet opening of the latter without any hydraulic connection inside the radiating panel (1).

12. Radiating panel (1) for ambient climate-control, according to any one of the preceding claims, **characterized in that** the serpentine tubes (6) are connected outside said radiating panel (1) at the ends thereof to manifolds, by means of connectors that are engaged on the external edge of the ends of said serpentine tubes (6).

13. Radiating panel (1) for ambient climate-control, according to any one of the preceding claims, **characterized in that** the first internal surface (2") of said thermal-insulating layer (2) comprises:
- at least four extension zones (2A) arranged symmetrically both with respect to said longitudinal plane (P1) and with respect to said transverse plane (P2), and in each of such extension zones (2A) a corresponding said extension section (3') is extended;
- at least one intersection zone (2B), arranged at the intersection of said longitudinal plane (P1) with said transverse plane (P2), and in such intersection zone (2B) said connector sections (3") are extended.

## Patentansprüche

1. Strahlungspanel (1) zur Umgebungsklimatisierung, das Folgendes umfasst:
- mindestens eine rechteckige wärmedämmende Schicht (2) mit zwei kurzen Seiten (C) und zwei langen Seiten (L), wobei diese wärmedämmende Schicht (2) mit einer Rückseite (2') und mit einer ersten Innenseite (2") ausgestattet ist; wobei die genannte Innenseite (2") mit mindestens einer zu der genannten ersten Innenseite (2") offenen Nut (3) mit schlangenförmigem Verlauf ausgestattet ist;
- mindestens eine mit einer freiliegenden Seite (4') und mit einer zweiten Innenseite (4") ausgestattete, zu der ersten Innenseite (2") der genannten wärmedämmenden Schicht (2) ausgestattete rechteckige Strahlungsschicht (4);
- mindestens ein im Inneren der Nut (3) der genannten wärmedämmenden Schicht (2) untergebrachtes und zwischen der genannten wärmedämmenden Schicht (2) und der genannten Strahlungsschicht (4) liegendes Schlangenrohr (6);
wobei die genannte mindestens eine Nut (3) Folgendes umfasst:
- mindestens zwei Bahnen (3A) mit schlangenförmigem Verlauf, die darauf ausgelegt sind, zwei erste Schlangenrohre (6A) getrennt voneinander unterzubringen, von denen jedes mit einem ersten Paar erster Öffnungen (30A) ausgestattet ist, die an einer genannten kurzen Seite (C) der genannten wärmedämmenden Schicht (2) angeordnet sind; wobei die genannten ersten Bahnen (3A) im Verhältnis zu einer Längsebene (P1), die in einer Medianposition parallel zu der langen Seite (L) der genannten wärmedämmenden Schicht (2) verläuft, symmetrisch angeordnet sind, ohne dass die genannten beiden ersten Bahnen (3A) sich schneiden;
- mindestens zwei zweite Bahnen (3B) mit schlangenförmigem Verlauf, die darauf ausgelegt sind, zwei zweite voneinander getrennte Schlangenrohre (6B) unterzubringen, von denen jedes mit einem zweiten Paar zweiter Öffnungen (30B) ausgestattet ist, die an der einen genannten langen Seite (L) der genannten wärmedämmenden Schicht (2) angeordnet sind; wobei die genannten zweiten Bahnen (3B) im Verhältnis zu einer in Medianposition parallel zu der kurzen Seite (C) der genannten wärmedämmenden Schicht (2) verlaufenden Querebene (P2) symmetrisch angeordnet ist, ohne dass die genannten beiden zweiten Bahnen (3B) einander schneiden;
- mindestens vier dritte Bahnen (3C) mit schlangenförmigem Verlauf, die darauf ausgelegt sind, vier voneinander getrennte dritte Schlangenrohre (6) unterzubringen, von denen jedes mit einem dritten Paar dritter Öffnungen (30C) ausgestattet ist, die an den beiden langen Seiten (L) der genannten wärmedämmenden Schicht (2) angeordnet sind, zwei für jede lange Seite (L); wobei die genannten vier dritten Bahnen (3C) sowohl im Verhältnis zu der genannten Längsebene (P1), die in einer Medianposition parallel zu der langen Seite (L) der genannten wärmedämmenden Schicht (2) verläuft, als auch im Verhältnis zu der genannten Querebene (P2), die in einer Medianposition parallel zu der kurzen Seite (C) der genannten wärmedämmenden Schicht (2) verläuft, symmetrisch angeordnet sind, ohne dass die genannten vier dritten Bahnen (3C) einander schneiden;
- wobei das genannte Strahlungspanel (1) **dadurch gekennzeichnet ist, dass** die genannte Nut (3) Folgendes umfasst:
- mindestens vier Verlaufsabschnitte (3') ohne Schnittstellen, die sowohl im Verhältnis zu der genannten Längsebene (P1) als auch im Verhältnis zu der genannten Querebene (2) symmetrisch angeordnet sind und entsprechende Abschnitte der genannten Bahnen (3A, 3B, 3C) bilden;
- mehrere Verbindungsabschnitte (3"), die einander schneiden und dazu platziert sind, um die genannten Verlaufsabschnitte (3') zu verbinden;
- wobei die genannte Nut (3) das Ergebnis der Überlagerung der genannten ersten, zweiten und dritten Bahnen (3A, 3B, 3C) ist, die auf fast ihrem gesamten Verlauf übereinstimmen, mit Ausnahme von nebeneinander liegenden Paaren von Längs- und Querabschnitten in der Mitte in einem mittigen Bereich des genannten Strahlungspanels (1), die durch gebogene Abschnitte (3G) miteinander verbunden sind;
- wobei die genannten Verbindungsabschnitte (3") die genannten nebeneinanderliegenden Paare der mittleren Längs- und Querabschnitte (3E, 3F) und die genannten gekrümmten Abschnitte (3G) umfassen.

2. Strahlungspanel (1) zur Umgebungsklimatisierung nach Anspruch 1, **dadurch gekennzeichnet, dass** mindestens eine leitende Platte (5) zwischen der ersten Innenseite (2") der genannten wärmedämmenden Schicht (2) und der zweiten Innenseite (4") der genannten Strahlungsschicht (4) umfasst und mit einem hervorstehendem Kanal (50) ausgestattet ist, der fest in der genannten Nut (3) montiert ist und das genannte Schlangenrohr (6) unterbringt.

3. Strahlungspanel (2) zur Umgebungsklimatisierung nach Anspruch 1, **dadurch gekennzeichnet, dass** die genannten beiden ersten Schlangenrohre (6A) in den genannten beiden ersten Bahnen (3A) untergebracht sind, die zwei entsprechende erste mittlere Zweige (3A') umfassen, die ohne Unterbrechung parallel zueinander entlang des Verlaufs der genannten langen Seiten (L) bis zu zwei entsprechenden ersten Öffnungen (30A) verlaufen.

4. Strahlungspanel (1) zur Umgebungsklimatisierung nach Anspruch 3, **dadurch gekennzeichnet, dass** das genannte Strahlungspanel (1) entlang einer durch die Schnittstelle des genannten Strahlungspanels (1) mit der genannten Längsebene (P1) in Medianposition definierten ersten Schnittlinie (T1) in zwei erste getrennte Panels (100) getrennt werden kann.

5. Strahlungspanel (1) zur Umgebungsklimatisierung nach Anspruch 1, **dadurch gekennzeichnet, dass** die genannten zweiten Schlangenrohre (6B) in den genannten beiden zweiten Bahnen (3B) untergebracht sind, die zwei jeweilige zweite mittlere Zweige (3B') umfassen, die ohne Unterbrechung parallel zueinander entlang des Verlaufs der genannten kurzen Seiten (C) bis zu zwei entsprechenden zweiten Öffnungen (30B) verlaufen.

6. Strahlungspanel (1) zur Umgebungsklimatisierung nach Anspruch 5, **dadurch gekennzeichnet, dass** das genannte Strahlungspanel (1) entlang einer von der Schnittstelle des genannten Strahlungspanels (1) mit der genannten Längsebene (P2) in Medianposition definierten zweiten Schnittlinie (T2) in zwei zweite getrennte Panels (200) getrennt werden kann.

7. Strahlungspanel (1) zur Umgebungsklimatisierung nach Anspruch 1, **dadurch gekennzeichnet, dass** die genannten drei Schlangenrohre (6C) in den genannten vier dritten Bahnen (3C) untergebracht sind, die jeweils einen dritten mittleren Zweig (3C') umfassen, der auf einem ersten Abschnitt (3AC') parallel zu der langen Seite (L) der genannten wärmedämmenden Schicht (2) und parallel zu dem ersten Abschnitt (3AC') des genannten dritten mittleren Zweigs (3C') auf einem quer liegenden angrenzenden dritten Rohr (6C) und auf einem zweiten Abschnitt (3BC') mit dem ersten mittels einer 90°-Kurve parallel zu der kurzen Seite (C) der genannten wärmedämmenden Schicht (2) und parallel zu dem zweiten Abschnitt (3BC') des dritten mittleren Zweigs (3C') eines längsverlaufenden angrenzenden dritten Rohrs (6C) verbunden ist.

8. Strahlungspanel (1) zur Umgebungsklimatisierung nach Anspruch 7, **dadurch gekennzeichnet, dass** das genannte Strahlungspanel (1) in vier getrennte Panels (300) entlang einer dritten (T3) und einer vierten Schnittlinie (T4) getrennt werden kann, von denen die dritte Schnittlinie (T3) durch die Schnittstelle des genannten Strahlungspanels (1) mit der genannten Längsebene (P1) in Medianposition definiert und die vierte Schnittlinie (T4) durch die Schnittstelle des genannten Strahlungspanel (1) mit der genannten Querebene (P2) in Medianposition definiert wird.

9. Strahlungspanel (1) zur Umgebungsklimatisierung nach einem beliebigen der vorangegangenen Ansprüche, **dadurch gekennzeichnet, dass** das Paar Öffnungen (30A, 30B, 30C) jeder entsprechenden Bahn (3A, 3B, 3C) der genannten Nut (3) mit einem Aufnahmesitz (7) verbunden ist, der bis zu der umlaufenden Kante (10) des Strahlungspanels (1) verläuft und geeignet ist, einen gebogenen Endabschnitt (60) des genannten entsprechenden Schlangenrohrs (6) unterzubringen.

10. Strahlungspanel (1) zur Umgebungsklimatisierung nach Anspruch 2, **dadurch gekennzeichnet, dass** die genannte mindestens eine leitende Platte (5) eine Stärke von nicht weniger als 0,35 mm und vorzugsweise 0,4 mm aufweist.

11. Strahlungspanel (1) zur Umgebungsklimatisierung nach einem beliebigen der vorangegangenen Ansprüche, **dadurch gekennzeichnet, dass** die in der genannten Nut (3) untergebrachten Schlangenrohre (6) von einer Einlassöffnung zu einer Auslassöffnung Letzterer ohne jegliche Wasseranschlüsse im Inneren des Strahlungspanels (1) verlaufen.

12. Strahlungspanel (1) zur Umgebungsklimatisierung nach einem beliebigen der vorangegangene Ansprüche, **dadurch gekennzeichnet, dass** die Schlangenrohre (6) außerhalb des genannten Strahlungspanels (1) an dessen Ende mittels Verbindern, die am Außenrand der Enden der genannten Schlangenrohre (6) angebracht sind, an Verteiler angeschlossen sind.

13. Strahlungspanel (1) zur Umgebungsklimatisierung nach einem beliebigen der vorangegangenen Ansprüche, **dadurch gekennzeichnet, dass** die erste Innenseite (2") der genannten wärmedämmenden Schicht (2) Folgendes umfasst:
- mindestens vier sowohl im Verhältnis zu der genannten Längsebene (P1) als auch im Verhältnis zu der genannten Querebene (P2) symmetrisch angeordnete Verlaufsbereiche (2), wobei in jedem dieser Verlaufsbereiche (2A) ein entsprechender genannter Verlaufsabschnitt (3') verläuft;
- mindestens einen an der Schnittstelle der genannten Längsebene (P1) mit der genannten Querebene (P2) angeordneten Schnittstellenbereich (2B), wobei in diesem Schnittstellenbereich (2B) die genannten Verbindungsabschnitte (3") verlaufen.

## Revendications

1. Panneau rayonnant (1) pour le contrôle du climat ambiant, qui comprend :
- au moins une couche rectangulaire thermiquement isolante (2), ayant deux petits côtés (C) et deux côtés longs (L), la couche thermiquement isolante (2) étant munie d'une face arrière (2') et d'une première face interne (2") ; ladite première face interne (2") étant munie d'au moins une rainure (3) avec une extension en serpentin s'ouvrant vers ladite première face interne (2") ;
- au moyens une couche rectangulaire rayonnante (4), munie d'une face exposée (4') et d'une deuxième face interne (4") dirigée vers la première face interne (2") de ladite couche thermiquement isolante (2) ;
- au moins un tube en serpentin (6) logé dans la rainure (3) de ladite couche thermiquement isolante (2) et interposé entre ladite couche thermiquement isolante (2) et ladite couche rayonnante (4) ;
dans lequel ladite au moins une rainure (3) comprend :
- au moins deux premiers parcours (3A) avec une extension en serpentin, configurés pour loger deux premiers tubes en serpentin (6A) séparément l'un de l'autre, chacun étant muni d'une première paire de premières ouvertures (30A), qui sont agencées sur un petit côté (C) de ladite couche thermiquement isolante (2) ; lesdits deux premiers parcours (3A) étant agencés symétriquement par rapport à un plan longitudinal (P1) qui s'étend en position médiane parallèlement au côté long (L) de ladite couche thermiquement isolante (2) sans que lesdits deux premiers parcours (3A) ne se croisent ;
- au moins deux deuxièmes parcours (3B) avec une extension en serpentin, configurés pour loger deux deuxièmes tubes en serpentin (6B) séparément l'un de l'autre, chacun étant muni d'une deuxième paire de deuxièmes ouvertures (30B), qui sont agencées sur un côté long (L) de ladite couche thermiquement isolante (2) ; lesdits deux deuxièmes parcours (3B) étant agencés symétriquement par rapport à un plan transversal (P2) qui s'étend en position médiane parallèlement au petit côté (C) de ladite couche thermiquement isolante (2) sans que lesdits deux deuxièmes parcours (3B) ne se croisent ;
- au moins deux troisièmes parcours (3C) avec une extension en serpentin, configurés pour loger quatre troisièmes tubes en serpentin (6C) séparément les uns des autres, chacun étant muni d'une troisième paire de troisièmes ouvertures (30C), qui sont agencées sur les deux côtés longs (L) de ladite couche thermiquement isolante (2), deux par côté long (L) ; lesdits quatre troisièmes parcours (3C) étant agencés symétriquement par rapport à un plan longitudinal (P1) qui s'étend en position médiane parallèlement au côté long (L) de ladite couche thermiquement isolante (2) et par rapport à un plan transversal (P2) qui s'étend en position médiane parallèlement au petit côté (C) de ladite couche thermiquement isolante (2) sans que lesdits quatre troisièmes parcours (3C) ne se croisent ;
ledit panneau rayonnant (1) étant **caractérisé en ce que** ladite rainure (3) comprend :
- au moins quatre sections d'extension (3') sans intersections, qui sont agencées symétriquement par rapport audit plan longitudinal (P1) et par rapport audit plan transversal (P2) et qui constituent les sections correspondantes desdits parcours (3A, 3B, 3C) ;
- plusieurs sections de connexion (3") se croisant les unes les autres et placées pour joindre lesdites sections d'extension (3') ;
dans lequel ladite rainure (3) résulte de la superposition desdits premier, deuxième et troisième parcours (3A, 3B, 3C), qui coïncident sur presque l'entièreté de leur extension, sauf dans une zone centrale du panneau rayonnant (1), pour des paires adjacentes de sections centrales longitudinales et transversales (3E, 3F) connectées par des sections incurvées (3G) ;
dans lequel lesdites sections de connexion (3") comprennent lesdites paires adjacentes de sections centrales longitudinales et transversales (3E, 3F) et lesdites sections incurvées (3G).

2. Panneau rayonnant (1) pour le contrôle du climat ambiant selon la revendication 1, **caractérisé en ce qu'**il comprend au moins une plaque conductrice (5) disposée entre la première face interne (2") de ladite couche thermiquement isolante (2) et la deuxième face interne (4") de ladite couche rayonnante (4) et munie d'un canal en saillie (50) engagé par conjugaison de force avec ladite rainure (3) et logeant ledit tube en serpentin (6).

3. Panneau rayonnant (1) pour le contrôle du climat ambiant selon la revendication 1, **caractérisé en ce que** lesdits deux premiers tubes en serpentin (6A) sont logés dans lesdits deux premiers parcours (3A), qui comprennent deux premières ramifications centrales (3A') respectives, qui s'étendent sans interruption, parallèlement l'une à l'autre le long desdits côtés longs (L) jusqu'aux deux premières ouvertures (30A) correspondantes.

4. Panneau rayonnant (1) pour le contrôle du climat ambiant selon la revendication 3, **caractérisé en ce que** ledit panneau rayonnant (1) peut être séparé en deux premiers panneaux distincts (100) le long d'une première ligne de découpe (T1) définie par l'intersection dudit panneau rayonnant (1) avec ledit plan médian longitudinal (P1).

5. Panneau rayonnant (1) pour le contrôle du climat ambiant selon la revendication 1, **caractérisé en ce que** lesdits deuxièmes tubes en serpentin (6B) sont logés dans lesdits deuxièmes parcours (3B), qui comprennent deux deuxièmes ramifications centrales (3B') respectives, qui s'étendent sans interruption, parallèlement l'une à l'autre le long desdits petits côtés (C) jusqu'aux deux deuxièmes ouvertures (30B) correspondantes.

6. Panneau rayonnant (1) pour le contrôle du climat ambiant selon la revendication 5, **caractérisé en ce que** ledit panneau rayonnant (1) peut être séparé en deux deuxièmes panneaux distincts (200) le long d'une deuxième ligne de découpe (T2) définie par l'intersection dudit panneau rayonnant (1) avec ledit plan médian transversal (P2).

7. Panneau rayonnant (1) pour le contrôle du climat ambiant selon la revendication 1, **caractérisé en ce que** lesdits quatre troisièmes tubes en serpentin (6C) sont logés dans lesdits quatre troisièmes parcours (3C), qui comprennent chacun, une troisième ramification centrale (3C'), qui s'étend concernant une première section (3AC'), parallèlement au côté long (L) de ladite couche thermiquement isolante (2) et parallèlement à la première section (3AC') de la troisième ramification centrale (3C') d'un troisième tube transversalement contigu (6C), et concernant une deuxième section (3BC') connectée à la première au moyen d'un angle de 90 degrés, parallèlement au petit côté (C) de ladite couche thermiquement isolante (2) et parallèlement à ladite deuxième section (3BC') de la troisième ramification centrale (3C') d'un troisième tube longitudinalement contigu (6C).

8. Panneau rayonnant (1) pour le contrôle du climat ambiant selon la revendication 7, **caractérisé en ce que** ledit panneau rayonnant (1) peut être séparé en quatre panneaux distincts (300) le long d'une troisième (T3) et une quatrième ligne de découpe (T4), la troisième ligne de découpe (T3) étant définie par l'intersection dudit panneau rayonnant (1) avec ledit plan médian longitudinal (P1) et la quatrième ligne de découpe (T4) étant définie par l'intersection dudit panneau rayonnant (1) avec ledit plan médian transversal (P2).

9. Panneau rayonnant (1) pour le contrôle du climat ambiant selon l'une quelconque des revendications précédentes, **caractérisé en ce que** la paire d'ouvertures (30A, 30B, 30C) de chaque parcours (3A, 3B, 3C) correspondant de ladite rainure (3) est en communication avec un siège de réception (7), qui s'étend jusqu'au bord périphérique (10) du panneau rayonnant (1) et qui est susceptible de longer une section terminale courbe (60) dudit tube en serpentin (6) correspondant.

10. Panneau rayonnant (1) pour le contrôle du climat ambiant selon la revendication 2, **caractérisé en ce que** ladite au moins une plaque conductrice (5) a une épaisseur non inférieure à 0,35 mm et de préférence, se situant à 0,4 mm.

11. Panneau rayonnant (1) pour le contrôle du climat ambiant selon l'une quelconque des revendications précédentes, **caractérisé en ce que** lesdits tubes en serpentin (6) logés dans ladite rainure (3) s'étendent depuis l'ouverture d'entrée jusqu'à l'ouverture de sortie de celle-ci, sans connexion hydraulique à l'intérieur du panneau rayonnant (1).

12. Panneau rayonnant (1) pour le contrôle du climat ambiant selon l'une quelconque des revendications précédentes, **caractérisé en ce que** les tubes en serpentin (6) sont connectés à l'extérieur dudit panneau rayonnant (1), à leurs extrémités à des collecteurs, au moyen de connecteurs qui s'engagent sur le bord extérieur des extrémités desdits tubes en serpentin (6).

13. Panneau rayonnant (1) pour le contrôle du climat ambiant selon l'une quelconque des revendications précédentes, **caractérisé en ce que** la première surface interne (2") de ladite couche thermiquement isolante (2) comprend :
- au moins quatre zones d'extension (2A) agencées symétriquement deux à deux par rapport audit plan longitudinal (P1) et par rapport audit plan transversal (P2), et dans chacune de ces zones d'extension (2A), ladite section d'extension (3') correspondante est déployée ;
- au moins une zone d'intersection (2B) agencée à l'intersection dudit plan longitudinal (P1) avec ledit plan transversal (P2), et dans cette zone d'intersection (2B), lesdites sections de connexion (3") se déploient.
